# EUROPÄISCHE PATENTSCHRIFT

(11) **EP 3 067 685 B1**
(45) Veröffentlichungstag und Bekanntmachung des Hinweises auf die Patenterteilung: **03.06.2020**
(21) Anmeldenummer: 16159245.6
(22) Anmeldetag: 08.03.2016
(51) Int. Cl.: G01N 15/02, G01N 15/14, G02B 21/00, G01N 21/85

(54) **VORRICHTUNG FÜR BILDAUFNAHMEN EINES MESSVOLUMENS IN EINEM BEHÄLTER**
DEVICE FOR TAKING IMAGES OF A MEASURING VOLUME IN A CONTAINER
DISPOSITIF DE PRISES DE VUE D'UN VOLUME DE MESURE DANS UN CONTENEUR

(30) Priorität: 10.03.2015 DE 102015103497
(43) Veröffentlichungstag der Anmeldung: 14.09.2016
(73) Patentinhaber: Technische Universität Kaiserslautern, 67663 Kaiserslautern (DE)
(72) Erfinder: Lichti, Markus, 67259 Kleinniedesheim (DE); Prof. Dr. Bart, Hans-Jörg, 67691 Hochspeyer (DE); Roth, Christopher, 67657 Kaiserslautern (DE)
(74) Vertreter: Müller, Jochen

(56) Entgegenhaltungen:
- EP-A1- 0 828 154
- DE-A1-102008 058 785
- US-A1- 2003 147 132
- MATTHIAS MICKLER ET AL: "Optical Multimode Online Probe: Erfassung und Analyse von Partikelkollektiven", CHEMIE INGENIEUR TECHNIK., Bd. 85, Nr. 6, 6. Mai 2013 (2013-05-06), Seiten 901-906, XP055286488, WEINHEIM; DE ISSN: 0009-286X, DOI: 10.1002/cite.201200139

## Beschreibung

Die Erfindung bezieht sich auf eine Vorrichtung für Bildaufnahmen eines Messvolumens in einem Behälter zur Ermittlung von Partikeln und/oder Partikelgrößen im Durchlichtverfahren mit einer Kamera, die in einem mit einem Montageflansch verbundenen Hüllrohr angeordnet ist und der im Strahlengang eine mit einer Einstellvorrichtung gekoppelte Lichtquelle zugeordnet ist.

Eine derartige Vorrichtung ist aus Mickler, M; Bart; H.-J.: Optical Multimode Online Probe: Erfassung und Analyse von Partikelkollektiven, Chemie Ingenieur Technik, 2013, Vol. 85, No. 6, S. 901-906, bekannt. Hierbei sind die Lichtquelle und die Kamera in unterschiedlichen rohrförmigen Gehäusen untergebracht, die diametral gegenüberliegend in einer Wandung eines Behälters angeordnet sind. Im Realeinsatz müssen spezielle Adapterringe gefertigt werden, um den Zugang in eine standardisierte Kolonne oder einen vergleichbaren Apparat zu ermöglichen, bei dem die genau diametrale Anordnung von Lichtquelle und die Kamera sicherzustellen. Dies ist an bestehenden realen Apparaten mit Durchmessern von bis zu mehreren Metern technisch nicht realisierbar.

Die DE 100 52 384 B4 offenbart eine Vorrichtung zur Ermittlung von Partikeleigenschaften in einem fluiden Medium enthaltener Partikel, insbesondere der Morphologie, Form und/oder der Größe, Die Vorrichtung umfasst eine CCD-Kamera, die durch ein Fenster und eine Optik die Partikel in einem Messvolumen in einer Betrachtungsrichtung aufnimmt, Im Weiteren ist eine Beleuchtungseinrichtung vorgesehen, die die Partikel in dem Messvolumen im Durchlicht mittels einer Lichtquelle beleuchtet. Eine Auswerteeinheit dient zur Bestimmung der Partikeleigenschaften aufgrund der von der CCD-Kamera erzeugten Abbildungen der Partikel, wobei außerhalb des Mediums im Strahlengang der Lichtquelle und/oder der CCD-Kamera wenigstens ein optischer Filter angeordnet ist, der Licht bestimmter Wellenlängen selektiv passieren lässt oder ausblendet oder eine bestimmte Polarisationsrichtung durchlässt. Zur Montage der Vorrichtung an einer Montageöffnung eines Prozessbehälters oder einer Rohrleitung ist ein Montageflansch vorgesehen, der einen rohrförmigen Tubus mit dem stirnseitig angeordneten Fenster sowie einen Arm trägt, wobei der Arm ein U-förmiges freies Ende mit einem Beleuchtungskopf aufweist, der ein Fenster trägt, das parallel zu dem Fenster des Tubus ausgerichtet ist, wobei zwischen den Fenstern ein Freiraum gebildet ist, der das zu messende Volumen begrenzt. Mit einer Einstellvorrichtung, die eine Verlagerung des Beleuchtungskopfes zu der CCD-Kamera ermöglicht, lässt sich das Messvolumen verändern, indem der Abstand der beiden Fenster zueinander vergrößert oder verkleinert wird. Diese Vorrichtung ist insofern nachteilig, als sich der parallel und beabstandet zum Tubus erstreckende Arm störend in dem zu untersuchenden Medium in dem Prozessbehälter auswirkt, in dem er insbesondere die Strömung des Mediums beeinflusst. Im Weiteren lässt die starr angeordnete CCD-Kamera keine exakte Ermittlung von in dem Fluid vorhandenen Partikeln und/oder Partikelgrößen zu.

Die US 2003/0147132 A1 offenbart eine Vorrichtung für Bildaufnahmen eines Messvolumens in einem Behälter zur Ermittlung von Partikeln und/oder Partikelgrößen im Durchlichtverfahren mit einer Kamera, der im Strahlengang eine Lichtquelle zugeordnet ist, wobei der mit einer Verstellvorrichtung verbundenen Kamera ein an dem in einem Hüllrohr verschiebbar gelagerten Mikroskopaußenrohr zugeordnet ist. Das Hüllrohr 2 ist abgedichtet und verschiebbar in einer Bohrung eines Anschlussports des Behälters angeordnet. Auf der dem Objektiv gegenüberliegenden Stirnseite des Hüllrohrs ist die Verstellvorrichtung angeordnet, und die ist in dem Hüllrohr aufgenommen.

Matthias Mickler at al. offenbart in "Optical Multimode Online Probe: Erfassung und Analyse von Partikelkollektiven", Chemie Ingenieur Technik, Bd. 85, Nr. 6, 2013, Seiten 901-906, eine Vorrichtung für Bildaufnahmen eines Messvolumens in einem Behälter zur Ermittlung von Partikeln, wobei die Sonde aus zwei Teilen besteht. Die Teilen sind verschiebbar montiert, um die Position des Messvolumens variieren zu können.

Die EP0828154 A1 offenbart eine andere Vorrichtung für Bildaufnahmen eines Messvolumens in einem Behälter zur Ermittlung von Partikeln.

Der Erfindung liegt die Aufgabe zugrunde, eine Vorrichtung der eingangs genannten Art zu schaffen, mit der eine exakte Untersuchung von in einem Fluid vorhandenen Partikel im Durchlichtprinzip möglich ist und die von nur einer Seite in einen Behälter mit dem zu untersuchenden Fluid einbringbar ist.

Erfindungsgemäß wird die Aufgabe durch die Merkmale des unabhängigen Anspruchs gelöst.

Die Unteransprüche stellen vorteilhafte Ausgestaltungen der Erfindung dar.

Bei der im Rahmen der Erfindung verwendeten Kamera handelt es sich um eine Digitalkamera, die beispielsweise mit einem mit entsprechender Software ausgestatteten Computer verbunden ist, um die Anzahl von Partikel und/oder deren Größe im Messvolumen auszuwerten. Gleichermaßen ist es möglich, die aufgenommenen Bilder auf einem der Kamera zugeordneten Datenträger zu speichern, wozu die Kamera mit einer entsprechenden Speichervorrichtung verbunden ist.

Als Lichtquelle können Hochleistungs-Leuchtdioden, Laser, Infrarot- oder Ultraviolett-Lichtquellen eingesetzt werden.

Um die Partikelgrößen bestimmen zu können, ist die Verwendung eines herkömmlichen Objektivs nicht empfehlenswert, da ein solches Objektiv Objekte derselben Größe, jedoch mit verschiedenen Entfernungen zum Objektiv, im Bild unterschiedlich groß darstellt. Um diesen Effekt zu unterbinden, wird ein telezentrisches Objektiv eingesetzt, das in der Lage ist, Objekte gleicher Größe, die sich in verschiedenen Entfernungen zueinander und zu dem Objektiv befinden, gleichgroß darzustellen, so dass verschiedene Partikel im Bild ausgemessen und zueinander in ein Größenverhältnis gesetzt werden können. Da der Abstand der Kamera mittels der Verstellvorrichtung gegenüber dem Objektiv veränderbar ist, sind der Arbeitsabstand und damit die Schärfe des Bildes einstellbar. Das von einer Seite, also durch eine Öffnung, in einen Behälter einsetzbare Hüllrohr bildet mit den zugeordneten Komponenten eine handhabbare Einheit, die verschiebbar in dem Montageflansch angeordnet ist, so dass beispielsweise innerhalb eines Behälters die vorhandenen Partikel in unterschiedlichem Abstand zu der mit dem Montageflansch verbundenen Wandung ermittelt und beurteilt bzw. vermessen werden können. Bei dem Montageflansch kann es sich beispielsweise um ein genormtes bzw. standardisiertes Bauteil handeln, so dass er an in der Verfahrenstechnik üblichen Behälteröffnungen zu montieren ist. Die Verschiebung des Hüllrohrs ist im Wesentlichen nur durch dessen Länge und die Größe des Behälters bzw. Apparates mit dem zu untersuchenden Fluid begrenzt. Aufgrund der Kopplung der Kamera in dem Hüllrohr einerseits und der Lichtquelle in dem Gehäuse andererseits ist eine Sonde bereitgestellt, deren miteinander verbundenen wesentliche Komponenten durch eine einzige Bohrung in den mit dem zu untersuchenden Fluid gefüllten Behälter von einer Seite und in einem Arbeitsschritt einführbar sind. Hierbei wird das Durchlichtprinzip, das beispielsweise mit einer Lichtquelle und einer Kamera in unterschiedlichen rohrförmigen Gehäusen im zuvor erläuterten Stand der Technik beschrieben ist, beibehalten, das im Gegensatz zu einem ebenfalls endoskopischen Auflichtansatz viele Vorteile für die nachgeschaltete Bildauswertung bringt.

Nach einer Weiterbildung umfasst die Einstellvorrichtung mindestens einen sich durch das Hüllrohr erstreckenden Stab, der an seinem einen Ende mit dem rohrförmigen Gehäuse, das die Lichtquelle aufnimmt und konzentrisch zu dem Hüllrohr ausgerichtet ist, gekoppelt ist und mit seinem anderen Ende an einer Halteplatte der Einstellvorrichtung befestigt ist, wobei die Halteplatte in axialer Richtung des Stabes eine Gewindestange aufweist, die sich in einer zu dem Stab entgegengesetzten Richtung erstreckt und mit einer ortsfesten Einstellmutter zusammenwirkt. Zweckmäßigerweise, aber nicht zwingend, ist das Gehäuse mit zwei gegenüberliegenden Stäben gegenüber dem Hüllrohr gehalten, wobei die auch rohrförmigen Stäbe einen zylindrischen Querschnitt aufweisen, der derart dünn dimensioniert ist, dass er sich nicht negativ auf eine gegebenenfalls in das Messvolumen eintretende Strömung auswirkt. Die Lichtquelle ist mittels der Einstellvorrichtung gegenüber der zugeordneten Stirnseite des Hüllrohrs in ihrem Abstand verstellbar, um beispielsweise das Messvolumen zu verändern, insbesondere an die vorhandene Partikelkonzentration oder die Prozessgegebenheiten anzupassen. Selbstverständlich ist der äußere Durchmesser des die Lichtquelle aufnehmenden Gehäuses nicht oder nicht wesentlich größer als der äußere Durchmesser des Hüllrohrs bemessen, um durch eine Öffnung in den Behälter oder Apparat oder dergleichen durchgeführt zu werden. Aufgrund der Tatsache, dass der Antrieb nicht dem Gehäuse mit der Beleuchtungseinheit zugeordnet ist, ist der benötigte Bauraum in dem Apparat (Reaktor, Kessel, Kolonne, etc.) mit dem zu untersuchenden Fluid minimiert, was sich positiv auf die Hydrodynamik in dem Apparat auswirkt. Im Weiteren ist durch die bei der Erfindung realisierten Bauform die Größe des Messspaltes zwischen dem Gehäuse und dem Hüllrohr bzw. zwischen einer Kameraeinheit und einer Beleuchtungseinheit nicht limitiert und kann beliebig groß gestaltet und so auf die Partikelgrößen und Partikelkonzentration im Betrieb bei sich verändernden Bedingungen leicht angepasst werden. Unabhängig von den Bedingungen werden durch die telezentrische Optik immer vollkommen größenrichtige Partikelgrößenverteilungen geliefert. Darüber hinaus ist die Kamera beliebig in ihrer Position verschiebbar, was für die anspruchsvolle optische Erfassung der Partikel erforderlich ist, um den Arbeitsabständen und Tiefenschärfebereichen der Objektive Rechnung zu tragen.

Zur Erzielung einer gerichteten Lichtstrahlung nimmt das Gehäuse auf seiner in Richtung der Kamera weisenden Stirnseite eine Linse mit einer zugeordneten Lichtquelle abgedichtet auf. Bevorzugt ist innerhalb des Gehäuses zwischen der telezentrischen Linse und einem Träger der als mindestens eine Leuchtdiode ausgebildeten Lichtquelle eine Distanzhülse angeordnet. Nach der Auswahl einer entsprechenden Lichtquelle kann auf die Anordnung optischer Filter verzichtet werden. Die Energieversorgung der Lichtquelle erfolgt durch eine innerhalb des Gehäuses oder der Vorrichtung angeordnete Batterie oder einen Akkumulator oder eine sonstige Strom- bzw. Spannungsquelle. Ist eine außerhalb der Vorrichtung angeordnete Energiequelle vorgesehen, dann können die mit dem Gehäuse gekoppelten Stäbe der Einstellvorrichtung als Leiter oder als Kanäle zur Durchführung von elektrischen Leitern verwendet werden. Das für die Durchlichtaufnahmen erforderliche Licht wird beispielsweise mittels einer Hochleistungs-Leuchtdiode mit ca. 490 Lumen verwendet. Die telezentrische Linse trägt zur Verringerung von Abbildungsfehlern bei.

Um ein Austreten von Fluid aus dem Behälter im Bereich des in den Montageflansch eingesetzten Hüllrohrs zu verhindern und dennoch die axiale Verstellbarkeit des Hüllrohrs in dem Montageflansch sicher zu stellen, ist das Hüllrohr mittels einer abgedichteten Verschraubung lösbar in dem Montageflansch gehalten, wobei zwischen dem Hüllrohr und dem Montageflansch eine Radialdichtung angeordnet ist. Bei der Radialdichtung kann es sich um einen so genannten O-Ring handeln, der in einer umlaufenden Nut innerhalb des Montageflanschs fixiert ist.

Zur Festsetzung des Hüllrohres in einer gewünschten eingestellten Position weist bevorzugt der Montageflansch einen koaxialen Stutzen mit einem Innengewinde und einem fußseitigen Absatz auf, wobei das Hüllrohr durch eine an den Außendurchmesser des Hüllrohres angepasste Bohrung in einer Schraube der Verschraubung geführt ist, die mit ihrer Stirnseite einen auf dem Absatz aufliegenden Dichtring beaufschlagend in das Innengewinde eingedreht ist. Ist die Schraube gelöst und übt keinen oder nur einen geringen Druck auf den Dichtring aus, dann kann das Hüllrohr innerhalb des Stutzens verschoben werden und ist dennoch abgedichtet gehalten. Die festgedrehte Schraube übt in axialer Richtung Druck auf den Dichtring aus, der hierbei radial sowohl an den äußeren Umfang des Hüllrohr als auch an einen zugeordneten Innendurchmesser des Stutzens im Bereich des Absatzes angepresst wird und das Hüllrohr fixiert.

Um das Hüllrohr beidseitig zu verschließen, damit die Kamera und das zugeordneten Objektiv geschützt sind, trägt das Hüllrohr auf der der Lichtquelle zugeordneten Stirnseite einen mit einer transparenten Scheibe bestückten Ring und auf der Seite des Montageflanschs einen abgedichteten Deckel, wobei zwischen dem Ring und dem Deckel mindestens eine vorgespannte Spannstange wirksam ist. Die unter Zugspannung stehenden Spannstangen bewirken eine zuverlässige Befestigung des Ringes und des Deckels an dem Hüllrohr.

In Ausgestaltung ist der Scheibe eine Reinigungsvorrichtung zugeordnet. Mittels der Reinigungsvorrichtung wird eine Verunreinigung der Scheibe durch anhaftende Partikel oder Tropfen verhindert.

Zweckmäßigerweise umfasst die Reinigungsvorrichtung eine Düse für ein Spülgas, die in dem die Scheibe halternden Ring ausgebildet ist und mit dem mit Spülgas beaufschlagten Hüllrohr in Strömungsverbindung steht. Der das Hüllrohr abdichtend verschließende Deckel weist einen Druckgasanschluss auf. Demnach ist das Hüllrohr von dem Spülgas durchströmt, das Partikel oder Tröpfchen von der Scheibe bläst und damit die Scheibe reinigt. Bei dem Spülgas kann es sich in einem einfachen Fall um Druckluft handeln. Es ist aber auch die Verwendung eines anderen Gases, insbesondere eines inerten Gases, denkbar.

Die endoskopisch Durchlichtsonde, also die erfindungsgemäße Vorrichtung, umfasst zum einen eine Beleuchtungseinheit, umfassend die lichtstarke und nahezu punktförmigen Hochleistungs-LED Lichtquelle, deren geringe Stromzufuhr entweder über eine unmittelbar zugeordnete Batterie/einen Akkumulator oder über Kabel erfolgt, die durch dünnen Rohre (Abstandshalter) im Messvolumen verlaufen.

Das von der Lichtquelle ausgesendete Licht wird über optische Linsen in ein paralleles Lichtstrahlbündel überführt, und durch das Messvolumen zur Kamera geleitet. Dabei werden Tropfen und Blasen bedingt durch ihre Brechungsindizes und Lichtdurchlässigkeit auf dem Kamerachip als Schattenbilder aufgenommen. Die Kamera besitzt zudem eine telezentrische Optik, um eine größenechte, entfernungsunabhängige Partikeldetektion zu ermöglichen (das üblicherweise verwendete entozentrische Prinzip, welches in Fotokameras, Handy etc. zum Einsatz kommt, lässt Objekte, die weiter entfernt sind, immer kleiner erscheinen, als Objekte, die näher sind). Die Kamera ist durch verschiedene Stangenkonstruktionen verschieblich gelagert, um zum einen das Messvolumen in der Größe zu verändern, und zum anderen aber auch den Schärfebereich definiert einstellen zu können.

Die Beleuchtungseinheit kann durch die Verstellvorrichtung von außen jederzeit axial verschoben werden, um die Größe des Messvolumens an die jeweilige Partikelkonzentration oder die Prozessgegebenheiten anzupassen. Das Messvolumen ist im Wesentlichen vom Prozessmedium frei durchfließbar, so dass eine Prozessdatenverfälschung wesentlich vermindert ist. Um die Partikeleigenschaften aufzunehmen wird eine hochauflösende und schnelle CCD-Kamera verwendet, die die erhobenen Daten an einen Prozessrechner übergibt.

Im Rahmen der Erfindung wird sowohl bei der Beleuchtung als auch bei der Optik der Kamera die Telezentrie (aus Mickler, M; Bart; H.-J.: Optical Multimode Online Probe a.a.O) verwendet. Für messtechnische Anwendungen ist diese Anordnung unerlässlich, und in keiner Weise vergleichbar zu den handelsüblichen Beleuchtungs-/Kameraobjektivsystemen. Bei diesen werden Objekte je nach Entfernung größer oder kleiner als ihre tatsächliche Gestalt angezeigt. Zudem ist die durch die beschriebene Kombination erhaltene absolut orthonormale Ansicht wichtig für eine exakte Beurteilung der Partikeln im Apparat (Reaktor, Kessel, Kolonne, etc.).

Ferner ist die Einbringung der Sonde der Vorrichtung über einen Montageflansch sehr variabel und hält, bedingt durch die vorhandene Abdichtung, wie sie in Hydraulikzylindern angewendet wird, auch höheren Drücken als dem Umgebungsdruck stand.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

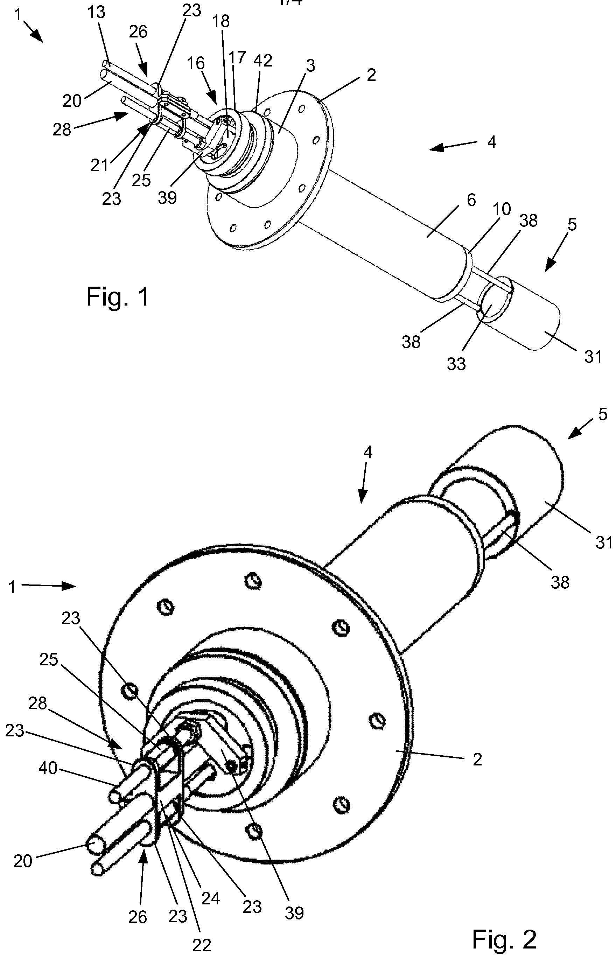

- Fig. 1: eine erste perspektivische Darstellung der Vorrichtung nach der Erfindung,
- Fig. 2: eine zweite perspektivische Darstellung der Vorrichtung nach Fig. 1,

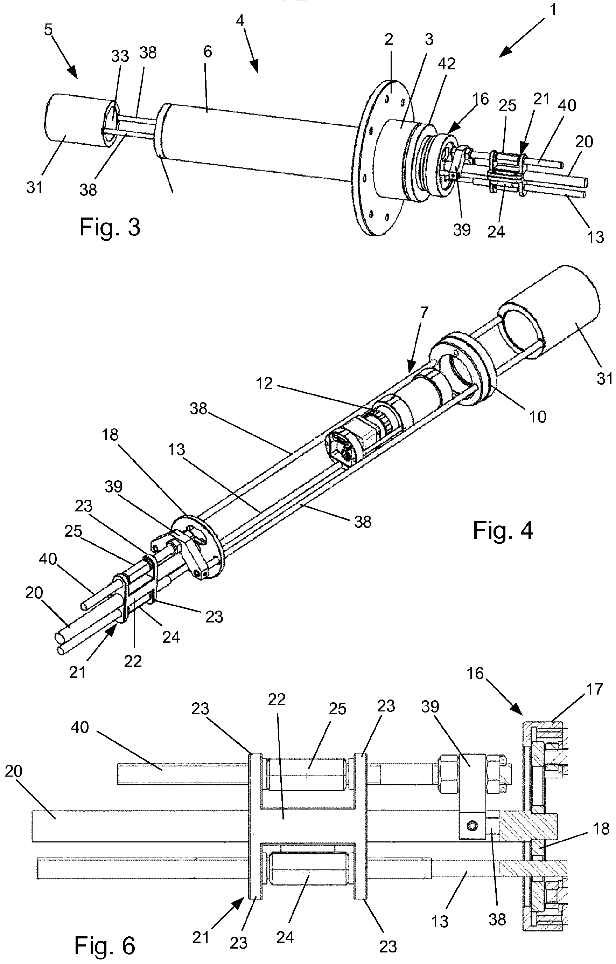

- Fig. 3: eine dritte perspektivische Darstellung der Vorrichtung nach Fig. 1,
- Fig. 4: eine perspektivische Teildarstellung der Vorrichtung nach Fig. 1,

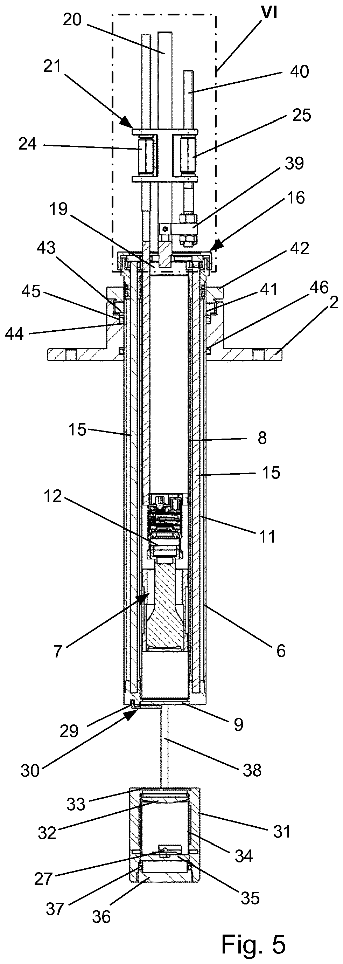

- Fig. 5: ein Längsschnitt durch die Vorrichtung nach Fig. 1,
- Fig. 6: eine vergrößerte Darstellung der Einzelheit VI nach Fig. 5 und

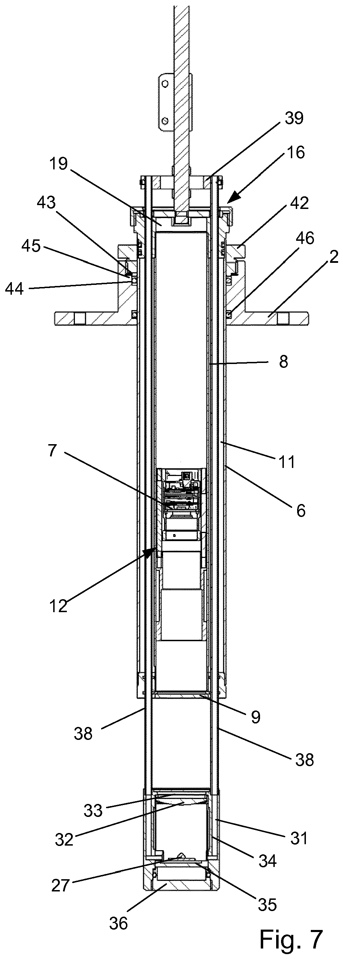

- Fig. 7: ein weiterer Längsschnitt durch die Vorrichtung nach Fig. 1.

Die Vorrichtung umfasst im Wesentlichen eine Sonde 1 zur optischen Ermittlung von Partikeln und/oder Partikelgrößen in einem Fluid und einen Montageflansch 2 zur Befestigung an einem das Fluid aufnehmenden Behälter oder Apparat oder dergleichen, wobei der Montageflansch 2 einen Stutzen 3 zur Durchführung der Sonde 1 aufweist.

Die Sonde 1 lässt sich im Wesentlichen in die beiden miteinander verbundenen Hauptkomponenten Kameraeinheit 4 und Beleuchtungseinheit 5 unterteilen, um die in dem Fluid vorhandenen Partikel, bei denen es sich nicht nur um Feststoffe, sondern auch um Tropfen handeln kann, im Durchlichtverfahren zu untersuchen.

Die Kameraeinheit 4 umfasst ein Hüllrohr 6 mit einer zugeordneten Kamera 7, insbesondere einer CCD-Kamera. Die Kamera 7 ist in einem Sondenrohr 8 gelagert, das auf der der Beleuchtungseinheit 5 zugewandten Stirnseite von einer transparenten Scheibe 9 überdeckt ist, die mittels eines an dem Hüllrohr 6 befestigten Rings 10 festgelegt ist. Der Ring 10 kann beispielsweise an das Hüllrohr 6 angeschweißt sein. In dem Sondenrohr 8 befindet sich im Weiteren ein telezentrisches Objektiv 12, das zwischen der Kamera 7 und der Scheibe 9 angeordnet ist. Das Sondenrohr 8 ist konzentrisch zu dem Hüllrohr 6 ausgerichtet und zwischen dem Sondenrohr 8 sowie dem Hüllrohr 6 ist ein Ringspalt 11, durch den sich zwei gegenüberliegende Spannstangen 15 erstrecken, deren eines Ende an dem Ring 10 befestigt ist und deren anderes Ende durch einen Deckel 16 geführt ist, der das Hüllrohr 6 auf der dem Ring 10 gegenüberliegenden Stirnseite verschließt. Die Spannstangen 15 tragen Muttern, um zwischen dem Ring 10 und dem Deckel 16 eine axiale Vorspannung zu erzeugen, damit unter Verwendung von Dichtringen das Hüllrohr 6 abgedichtet zu verschließen ist. Die Spannstangen 15 können an den Ring 10 angeschweißt sein.

Der Deckel 16 umfasst einen Überwurf 17 und eine Abdeckplatte 18, die auf einer Endkappe 19 aufliegt, wobei die Endkappe 19 das Sondenrohr 8 gegenüber dem Hüllrohr 6 zentriert und beide stirnseitig überdeckt. Von der Abdeckplatte 18 geht ein sich in axialer Richtung erstreckender Haltestab 20 mit einem H-förmigen Halter 21 ab, wobei sich der Haltestab 20 durch einen Steg 22 des Halters 21 erstreckt, von dem rechtwinklig auf jeder Seite zwei zueinander beabstandete Schenkel 23 abgehen, zwischen denen zwei Einstellmuttern 24, 25 angeordnet sind. Die eine Einstellmutter 24 ist Bestandteil einer der Kamera 7 zugeordneten Verstellvorrichtung 26 und die andere Einstellmutter 25 ist Bestandteil einer der Beleuchtungseinheit 5 zugeordneten Einstellvorrichtung 28.

Um die Kamera 7 relativ zu der Scheibe 9 in axialer Richtung zu verstellen, also ihre Lage in dem Sondenrohr 8 zu verändern, ist die Kamera 7 auf der der Scheibe abgewandten Seite mit einem sich axial durch das Sondenrohr 8 und den Deckel 16 erstreckenden Stellstab 13 der außerhalb des Hüllrohrs 6 angeordneten Verstellvorrichtung 26 verbunden, wobei der Stellstab 13 mit einem endseitigen Gewinde versehen ist, das sich durch die zugeordneten Schenkel 23 des Halters 21 erstreckt und mit der zwischen den Schenkeln 23 angeordneten Einstellmutter 24 zusammenwirkt.

Damit die Scheibe 9 von Verschmutzungen, beispielsweise in Form anhaftender Partikel oder Tropfen, zu befreien ist, ist eine Reinigungsvorrichtung vorgesehen, die eine in dem die Scheibe 9 halternden Ring 10 ausgebildete Düse 29 mit einem zugeordneten Luftleitring 30 umfasst. Die Düse 29 wird über den zwischen dem Hüllrohr 6 und dem Sondenrohr 8 vorhandenen Ringspalt 11 mit Spülgas versorgt, die über einen an dem Deckel 16 angeordneten Druckgasanschluss, der nicht dargestellt ist, zugeführt wird.

Die Beleuchtungseinheit 5 umfasst die in einem zylindrischen Gehäuse 31 angeordnete Lichtquelle 27, die vorliegend als eine Hochleistungsleuchtdiode ausgebildet ist, und eine als eine Sammellinse ausgebildete Linse 32. Innerhalb des auf der in Richtung der Kamera 7 weisenden Stirnseite mit einer Glasscheibe 33 verschlossenen Gehäuses 31 ist zwischen der Linse 32 bzw. einem Linsenträger und einem Träger 35 der Lichtquelle 27 eine Distanzhülse 34 angeordnet. Das Gehäuse 31, das eine Batterie oder einen Akkumulator für die Lichtquelle 27 aufweisen kann, ist auf der der Glasscheibe 33 gegenüberliegenden Stirnseite mit einem Verschlussstück 36 abgedichtet verschlossen, wobei das Verschlussstück 36 in das Gehäuse 31 eingeschraubt ist und zwischen dem Verschlussstück 36 und dem Gehäuse 31 ein Dichtring 37 angeordnet ist.

Das Gehäuse 31 ist mittels zwei parallel und beabstandet zueinander ausgerichteten Stäben 38, die sich durch den zwischen dem Hüllrohr 6 und dem Sondenrohr 8 ausgebildeten Ringspalt 11 erstrecken und Bestandteile der Einstellvorrichtung 28 sind, mit der Kameraeinheit 4 gekoppelt. Im Einzelnen erstrecken sich die Stäbe 38 von den Gehäuse 31 in axialer Richtung durch den Ring 10, den Ringspalt 11 und die Abdeckplatte 18 und sind endseitig in Bohrungen einer Halteplatte 39 der Einstellvorrichtung 28 gehalten. Von der Halteplatte 39 geht mittig eine Gewindestange 40 ab, die mit der zugeordneten Einstellmutter 25 zusammenwirkt, um die Beleuchtungseinheit 5 gegenüber der Kameraeinheit 4 zu verlagern und damit das Messvolumen zwischen der Scheibe 9 der Kameraeinheit 4 und der Glasscheibe 33 der Beleuchtungseinheit 5 zu verändern.

Das Hüllrohr 6 durchragt eine, eine Bohrung 41 aufweisende, Schraube 42, die in ein Innengewinde des Stutzens 3 des Montageflansches 2 eingeschraubt ist und mit ihrer Stirnseite 43 einen auf einem Absatz 44 in dem Stutzen 3 aufliegenden Dichtring 45 beaufschlagt. Im Weiteren ist in den Montageflansch 2 eine mit einer Radialdichtung 46 bestückte Ringnut 41 eingelassen. Die Radialdichtung 46 liegt abdichtend mit ihrem inneren Umfang an dem Hüllrohr 6 an und mit ihrem äußeren Umfang in der Ringnut 41 ein. Bei einer gelösten Schraube 42 ist die Sonde in dem Montageflansch 2 verschiebbar, so dass eine gewünschte und nur durch die Länge des Hüllrohrs 6 begrenzte Tiefe innerhalb des Behälters bzw. Apparates mit dem zu untersuchenden Fluid erreichbar ist. Mit dem Anziehen der Schraube 42 wird der Dichtring 45 gequetscht und das Hüllrohr 6 festgelegt.

**Bezugszeichen**

| | | | |
|---|---|---|---|
| 1. | Sonde | 25. | Einstellmutter |
| 2. | Montageflansch | 26. | Verstellvorrichtung |
| 3. | Stutzen | 27. | Lichtquelle |
| 4. | Kameraeinheit | 28. | Einstellvorrichtung |
| 5. | Beleuchtungseinheit | 29. | Düse |
| 6. | Hüllrohr | 30. | Luftleitring |
| 7. | Kamera | 31. | Gehäuse |
| 8. | Sondenrohr | 32. | Linse |
| 9. | Scheibe | 33. | Glasscheibe |
| 10. | Ring | 34. | Distanzhülse |
| 11. | Ringspalt | 35. | Träger |
| 12. | Objektiv | 36. | Verschlussstück |
| 13. | Stellstab | 37. | Dichtring |
| 14. | | 38. | Stab |
| 15. | Spannstange | 39. | Halteplatte |
| 16. | Deckel | 40. | Gewindestange |
| 17. | Überwurf | 41. | Bohrung |
| 18. | Abdeckplatte | 42. | Schraube |
| 19. | Endkappe | 43. | Stirnseite |
| 20. | Haltestab | 44. | Absatz |
| 21. | Halter | 45. | Dichtring |
| 22. | Steg | 46. | Radialdichtung |
| 23. | Schenkel | | |
| 24. | Einstellmutter | | |

## Patentansprüche

1. Vorrichtung für Bildaufnahmen eines Messvolumens in einem Behälter zur Ermittlung von Partikeln und/oder Partikelgrößen im Durchlichtverfahren mit einer Kamera (7), die in einem mit einem Montageflansch (2) verbundenen Hüllrohr (6) angeordnet ist und der im Strahlengang eine mit einer Einstellvorrichtung (28) gekoppelte Lichtquelle (27) zugeordnet ist, wobei der mit einer Verstellvorrichtung (26) verbundenen Kamera (7) ein telezentrisches Objektiv (12) innerhalb des Hüllrohrs (6) zugeordnet ist, wobei mittels der Verstellvorrichtung die Lage der Kamera in dem Hüllrohr veränderbar ist, wobei das Hüllrohr derart in einer Bohrung des Montageflanschs (2) angeordnet ist, dass das Hüllrohr (6) abgedichtet und verschiebbar angeordnet ist, wobei auf der dem Objektiv (12) gegenüberliegenden Stirnseite des Hüllrohrs (6) die Einstellvorrichtung (28) und die Verstellvorrichtung (26) angeordnet sind, und wobei die Einstellvorrichtung (28) mit einem die Lichtquelle (27) aufnehmenden und konzentrisch zu dem Hüllrohr ausgerichteten Gehäuse (31) gekoppelt ist, um die Lichtquelle gegenüber der Kamera zu verlagern.

2. Vorrichtung nach Anspruch 1, **dadurch gekennzeichnet, dass** die Einstellvorrichtung (28) mindestens einen sich durch das Hüllrohr (6) erstreckenden Stab (38) umfasst, der an seinem einen Ende mit dem rohrförmigen Gehäuse (31), das die Lichtquelle (27) aufnimmt, gekoppelt ist, und mit seinem anderen Ende an einer Halteplatte (39) der Einstellvorrichtung (28) befestigt ist, wobei die Halteplatte (39) in axialer Richtung des Stabes (38) eine Gewindestange (40) aufweist, die sich in einer zu dem Stab (38) entgegengesetzten Richtung erstreckt und mit einer ortsfesten Einstellmutter (25) zusammenwirkt.

3. Vorrichtung nach Anspruch 2, **dadurch gekennzeichnet, dass** das Gehäuse (31) auf seiner in Richtung der Kamera (7) weisenden Stirnseite eine Linse (32) mit einer zugeordneten Lichtquelle (27) abgedichtet aufnimmt.

4. Vorrichtung nach Anspruch 2 oder 3, **dadurch gekennzeichnet, dass** innerhalb des Gehäuses (31) zwischen der telezentrischen Linse (32) und einem Träger (35) der als mindestens eine Leuchtdiode ausgebildeten Lichtquelle (27) eine Distanzhülse (34) angeordnet ist.

5. Vorrichtung nach Anspruch 1, **dadurch gekennzeichnet, dass** das Hüllrohr (6) mittels einer abgedichteten Verschraubung lösbar in dem Montageflansch (2) gehalten ist, wobei zwischen dem Hüllrohr (6) und dem Montageflansch (2) eine Radialdichtung (46) angeordnet ist.

6. Vorrichtung nach Anspruch 5, **dadurch gekennzeichnet, dass** der Montageflansch (2) einen koaxialen Stutzen (3) mit einem Innengewinde und einem fußseitigen Absatz (44) aufweist, wobei das Hüllrohr (6) durch eine an den Außendurchmesser des Hüllrohres (6) angepasste Bohrung (41) in einer Schraube (42) der Verschraubung geführt ist, die mit ihrer Stirnseite einen auf dem Absatz (44) aufliegenden Dichtring (45) beaufschlagend in das Innengewinde eingedreht ist.

7. Vorrichtung nach einem der Ansprüche 1 bis 6, **dadurch gekennzeichnet, dass** das Hüllrohr (6) auf der der Lichtquelle (27) zugeordneten Stirnseite einen mit einer transparenten Scheibe (9) bestückten Ring (10) und auf der Seite des Montageflanschs (2) einen abgedichteten Deckel (16) trägt, wobei zwischen dem Ring (10) und dem Deckel (16) mindestens eine vorgespannte Spannstange (15) wirksam ist.

8. Vorrichtung nach Anspruch 7, **dadurch gekennzeichnet, dass** der Scheibe (9) eine Reinigungsvorrichtung zugeordnet ist.

9. Vorrichtung nach Anspruch 8, **dadurch gekennzeichnet, dass** die Reinigungsvorrichtung eine Düse (29) für ein Spülgas umfasst, die in dem die Scheibe (9) halternden Ring (10) ausgebildet ist und mit dem mit Spülgas beaufschlagten Hüllrohr (6) in Strömungsverbindung steht.

10. Vorrichtung nach einem der Ansprüche 7 bis 9, **dadurch gekennzeichnet, dass** der das Hüllrohr (6) abdichtend verschließende Deckel (16) einen Druckgasanschluss aufweist.

## Claims

1. Device for recording images of a measured volume in a container in order to determine particles and/or particle sizes in the transmitted-light method, comprising a camera (7) which is arranged in a cladding tube (6) connected to a mounting flange (2) and with which, in the beam path, a light source (27) coupled to a setting device (28) is associated, a telecentric objective (12) inside the cladding tube (6) being associated with the camera (7) connected to an adjustment device (26), it being possible to change the position of the camera in the cladding tube by means of the adjustment device, the cladding tube being arranged in a bore in the mounting flange (2) such that the cladding tube (6) is sealingly and displaceably arranged, the setting device (28) and the adjustment device (26) being arranged on the end face of the cladding tube (6) opposite the objective (12), and the setting device (28), in order to shift the light source with respect to the camera, being coupled to a housing (31) that receives the light source (27) and is concentrically aligned relative to the cladding tube.

2. Device according to claim 1, **characterized in that** the setting device (28) comprises at least one rod (38) that extends through the cladding tube (6), is coupled at one end thereof to the tubular housing (31) which receives the light source (27), and is fastened at the other end thereof to a holding plate (39) of the setting device (28), the holding plate (39) having, in the axial direction of the rod (38), a threaded rod (40) that extends in a direction counter to the rod (38) and interacts with a fixed setting nut (25).

3. Device according to claim 2, **characterized in that** the housing (31), on the end face thereof that faces the camera (7), sealingly receives a lens (32) having an associated light source (27).

4. Device according to either claim 2 or claim 3, **characterized in that** a spacer sleeve (34) is arranged within the housing (31) between the telecentric lens (32) and a support (35) of the light source (27) that is designed as at least one light-emitting diode.

5. Device according to claim 1, **characterized in that** the cladding tube (6) is releasably held in the mounting flange (2) by means of a sealed screw connection, a radial seal (46) being arranged between the cladding tube (6) and the mounting flange (2).

6. Device according to claim 5, **characterized in that** the mounting flange (2) has a coaxial connecting piece (3) having an internal thread and a foot-end shoulder (44), the cladding tube (6) passing through a bore (41) in a screw (42) of the screw connection, which bore is adapted to the outer diameter of the cladding tube (6), the end face of said screw being screwed into the internal thread so as to act on a sealing ring (45) resting on the shoulder (44).

7. Device according to any of claims 1 to 6, **characterized in that** the cladding tube (6) supports, on the end face associated with the light source (27), a ring (10) that is equipped with a transparent disc, (9) and, on the end having the mounting flange (2), a sealed cover (16), at least one pretensioned tensioning rod (15) acting between the ring (10) and the cover (16).

8. Device according to claim 7, **characterized in that** a cleaning device is associated with the disc (9).

9. Device according to claim 8, **characterized in that** the cleaning device comprises a nozzle (29) for a purge gas, which nozzle is formed in the ring (10) which holds the disc (9) and is in fluid connection with the cladding tube (6) supplied with purge gas.

10. Device according to any of claims 7 to 9, **characterized in that** the cover (16) sealingly closes cladding tube (6) and has a compressed gas connection.

## Revendications

1. Dispositif de prise de vue d'un volume de mesure dans un conteneur pour la détermination de particules et/ou de tailles de particules dans le procédé faisant appel à la transmission de lumière, comprenant une caméra (7) qui est disposée dans un tube de gainage (6) relié à une bride de montage (2) et à laquelle est associée une source lumineuse (27) accouplée à un dispositif de réglage (28) dans la trajectoire du faisceau, dans lequel un objectif télécentrique (12) à l'intérieur du tube de gainage (6) est associé à la caméra (7) reliée à un dispositif de déplacement (26), dans lequel la position de la caméra dans le tube de gainage peut être modifiée au moyen du dispositif de déplacement, dans lequel le tube de gainage est disposé dans un alésage de la bride de montage (2) de telle manière que le tube de gainage (6) soit disposé de manière étanche et déplaçable, dans lequel le dispositif de réglage (28) et le dispositif de déplacement (26) sont disposés sur le côté frontal du tube de gainage (6) opposé à l'objectif (12), et dans lequel le dispositif de réglage (28) est accouplé à un boîtier (31) recevant la source lumineuse (27) et orienté concentriquement au tube de gainage, afin de déplacer la source lumineuse par rapport à la caméra.

2. Dispositif selon la revendication 1, **caractérisé en ce que** le dispositif de réglage (28) comprend au moins une tige (38) s'étendant à travers le tube de gainage (6) et qui est accouplée à l'une de ses extrémités au boîtier tubulaire (31) qui reçoit la source lumineuse (27), et est fixée à son autre extrémité à une plaque de maintien (39) du dispositif de réglage (28), dans lequel la plaque de maintien (39) comporte, dans la direction axiale de la tige (38), une tige filetée (40) qui s'étend dans une direction opposée à la tige (38) et qui coopère avec un écrou de réglage fixe (25).

3. Dispositif selon la revendication 2, **caractérisé en ce que** le boîtier (31) reçoit de manière étanche une lentille (32) avec une source lumineuse (27) associée sur son côté frontal orienté en direction de la caméra (7).

4. Dispositif selon la revendication 2 ou 3, **caractérisé en ce qu'**une douille d'écartement (34) est disposée à l'intérieur du boîtier (31) entre la lentille télécentrique (32) et un support (35) de la source lumineuse (27) réalisée sous la forme d'au moins une diode électroluminescente.

5. Dispositif selon la revendication 1, **caractérisé en ce que** le tube de gainage (6) est maintenu de manière amovible dans la bride de montage (2) au moyen d'un raccord à vis étanche, dans lequel un joint radial (46) est disposé entre le tube de gainage (6) et la bride de montage (2).

6. Dispositif selon la revendication 5, **caractérisé en ce que** la bride de montage (2) comporte un raccord coaxial (3) doté d'un filetage intérieur et un épaulement (44) côté pied, dans lequel le tube de gainage (6) est guidé à travers un alésage (41), adapté au diamètre extérieur du tube de gainage (6), dans une vis (42) du raccord à vis, dont le côté frontal est vissé dans le filetage intérieur de manière à agir sur un anneau d'étanchéité (45) reposant sur l'épaulement (44).

7. Dispositif selon l'une des revendications 1 à 6, **caractérisé en ce que** le tube de gainage (6) supporte un anneau (10) muni d'un disque transparent (9) sur le côté frontal associé à la source lumineuse (27) et un couvercle étanche (16) sur le côté de la bride de montage (2), dans lequel au moins une tige de traction précontrainte (15) agit entre l'anneau (10) et le couvercle (16).

8. Dispositif selon la revendication 7, **caractérisé en ce qu'**un dispositif de nettoyage est associé au disque (9).

9. Dispositif selon la revendication 8, **caractérisé en ce que** le dispositif de nettoyage comprend une buse (29) pour un gaz de rinçage, laquelle buse est réalisée dans l'anneau (10) maintenant le disque (9) et est en liaison d'écoulement avec le tube de gainage (6) qui est exposé au gaz de rinçage.

10. Dispositif selon l'une des revendications 7 à 9, **caractérisé en ce que** le couvercle (16) fermant ce manière étanche le tube de gainage (6) comporte un raccord de gaz comprimé.
